# EUROPEAN PATENT APPLICATION

(11) **EP 4 832 518 A1**
(43) Date of publication of application: **28.10.2026**
(21) Application number: 24907546.6
(22) Date of filing: 20.12.2024
(51) Int. Cl.: H04W 4/38, H04W 4/02, H04W 4/44

(54) **SYSTEM AND TERMINAL**

(30) Priority: 22.12.2023 JP 2023216648
(71) Applicant: TOYOTA JIDOSHA KABUSHIKI KAISHA, Toyota-Shi, Aichi-Ken 471-8571 (JP)
(72) Inventor: SHAO, Xiao, Toyota-shi, Aichi 471-8571 (JP); FURUSAWA, Toru, Toyota-shi, Aichi 471-8571 (JP); TAKADA, Masaru, Toyota-shi, Aichi 471-8571 (JP); AONO, Kazumi, Toyota-shi, Aichi 471-8571 (JP); OKEDA, Shingo, Toyota-shi, Aichi 471-8571 (JP)
(74) Representative: Simmons & Simmons
(86) International application number: PCT/JP2024/045173
(87) International publication number: WO 2025/135163

(57) **Abstract**

A system that constitutes a wireless communication network, the system comprises a controller comprising at least one processor configured to execute: receiving a sensing request that requests a result of sensing in a first range designated using a predetermined location as an origination; and transmitting a first sensing result that is a result of executing sensing in a region including at least the first range based on the sensing request.

## Description

### BACKGROUND

### Technical Field

The present disclosure relates to a system and a terminal in a cellular communication network.

### Description of the Related Art

In cellular communication, it has been studied that a base station (gNB) or user equipment (UE) performs sensing of an object using a radio wave utilized for wireless communication. It is assumed that whether or not there is an obstacle, or the like, is determined by such sensing using a radio wave utilized in cellular communication. Concerning this, as an invention that utilizes a technique of determining whether or not there is an obstacle by sensing, for example, Patent document 1 discloses a vehicle drive assist apparatus that recognizes a surrounding environment around a vehicle, acquires feature information of a target object, determines, based on the feature information, whether or not the target object has a possibility of hindering traveling of the vehicle, and continues normal traveling control for the vehicle in a case where the target object is determined to have no possibility of hindering the traveling of the vehicle.

### [Citation List]

### [Patent document]

[Patent document 1]
Japanese Patent Laid-Open No. 2023-107027

### SUMMARY

The present disclosure is directed to transmitting a sensing result of a region of a range requested by user equipment (UE).

One aspect of an embodiment of the present disclosure is a system that constitutes a wireless communication network, the system comprising a controller comprising at least one processor configured to execute:
receiving a sensing request that requests a result of sensing in a first range designated using a predetermined location as an origination; and
transmitting a first sensing result that is a result of executing sensing in a region including at least the first range based on the sensing request.

Another aspect of an embodiment of the present disclosure is a terminal comprising a controller comprising at least one processor configured to execute:
transmitting to a core network, a sensing request that requests a result of sensing in a first range designated using a predetermined location as an origination; and
receiving from the core network, a first sensing result that is a result of executing sensing in a region including at least the first range based on the sensing request.

Further, another aspects includes a method to be executed by the above-described apparatus, a program for causing a computer to execute the method, or a computer-readable storage medium storing the program in a non-transitory manner.

According to the present disclosure, it is possible to transmit a sensing result of a region of a range requested by UE.

### BRIEF DESCRIPTION OF THE DRAWINGS

Fig. 1 is a conceptual diagram of processing to be executed by a system according to an embodiment.
Fig. 2 is a view illustrating an example of components of the system according to the embodiment.
Fig. 3A is a view illustrating a configuration example of an information processing apparatus operable as the system according to the embodiment.
Fig. 3B is a view illustrating a configuration example of an apparatus operable as a terminal of the system according to the embodiment.
Fig. 4 is a sequence diagram regarding sensing processing to be executed by a controller of the system according to the embodiment.
FIG. 5 is a flowchart regarding the sensing processing to be executed by the controller of the system according to the embodiment.
Fig. 6A and 6B is a view for describing a method of expressing a range for which sensing is to be requested.
Fig. 7 is a conceptual diagram of processing of mixing a sensing result executed by the system according to the embodiment and a sensing result executed by UE.

### DESCRIPTION OF THE EMBODIMENTS

A case where a result of sensing of a predetermined region by user equipment (UE) is not favorable will be described. It is conceivable that the UE complements the result of sensing by acquiring a result of 5G sensing also performed on the region by a base station (gNB) or another user equipment (UE) in a 5G system, the 5G sensing being sensing of an object using a radio wave utilized for wireless communication. As an example, the UE is a vehicle equipped with a mobile communication terminal. In such a system, there is a need for the UE to designate a specific range for which a sensing result is not favorable in a predetermined region and acquire a result of 5G sensing. For example, in a case where a vehicle that is UE senses a predetermined region using an in-vehicle camera, it is assumed that brightness of the predetermined region to be sensed is not sufficient, for example, during night-time. In such a case, there is a possibility that a result of sensing by the in-vehicle camera may not be favorable due to insufficient brightness of the predetermined region. Thus, the vehicle that is the UE can obtain a result of sensing with sufficient quality by acquiring and utilizing a result of sensing performed by another subject for a specific range for which a favorable sensing result could not be obtained among the predetermined region. It is therefore desirable that the system can acquire a result of sensing of the specific range designated by the UE and transmit the result to the UE.

The present disclosure in its one aspect provides a system that constitutes a wireless communication network, the system comprising a controller comprising at least one processor configured to execute:
receiving a sensing request that requests a result of sensing in a first range designated using a predetermined location as an origination; and
transmitting a first sensing result that is a result of executing sensing in a region including at least the first range based on the sensing request.

Examples of the wireless communication network include a system utilizing 5G, 4G, LTE, LTE-A, SUPER 3G, IMT-Advanced, NR, and others and a next generation system expanded based on these. Further, other examples of the wireless communication network include a system of IEEE 802.11 (Wi-Fi (registered trademark)), IEEE 802.16 (WiMAX (registered trademark)), IEEE 802.20, UWB, Bluetooth (registered trademark), and others and a next generation system expanded based on these. The wireless communication network may be a system obtained by combining a plurality of systems.

The first range is a predetermined region defined in a space. The first range may be expressed as a two-dimensional plane or a three-dimensional space.

The predetermined location is typically a point at which UE that transmits the sensing result is located.

The sensing request is, for example, information to be transmitted from an application function (hereinafter, an "AF") in 5G to the system and requesting to perform sensing in the first range and transmit a result of sensing executed in the first range to the AF, and the like.

The first sensing result is information representing a result of sensing executed in the first range by an apparatus, or the like, that has received an instruction from the controller. The first sensing result may be a result of 5G sensing executed in the first range by the apparatus, or the like.

The controller receives a sensing request in which the specific range is designated and transmits a result of sensing of the specific range to the AF, and the like, based on the sensing request.

By this means, the system according to the present disclosure can transmit to the AF, and the like, a result of 5G sensing in a spatial range designated by the AF.

Further, the sensing request may include information regarding a center angle centered around the predetermined location for designating the first range.

By this means, the system according to the present disclosure can accept a sensing request for a spatial range typically designated by an angle from the UE.

Further, the information regarding the center angle may include information indicating a bearing or an azimuth angle viewed from the predetermined location.

By this means, the system according to the present disclosure can accept the sensing request for the spatial range designated by a direction from the predetermined location.

Further, the sensing request may include information regarding time or a time length at or during which sensing is to be executed.

By this means, the system according to the present disclosure can accept the sensing request in which time or a time length at or during which sensing is to be performed is designated.

Further, the controller including at least one processor may be configured to execute transmitting an execution instruction that gives an instruction to execute sensing in the first range to at least one base station among a plurality of base stations.

The 5G sensing is typically executed by the base station that covers a region to be sensed. Thus, the system needs to request the base station, or the like, that covers the spatial range designated in the sensing request to perform 5G sensing.

By this means, the system according to the present disclosure can instruct the selected base station to execute 5G sensing in the first range.

Further, the sensing request may include a location of user equipment (UE) that has transmitted the sensing request as the predetermined location.

By this means, the system according to the present disclosure can accept the sensing request based on the location of the UE that has transmitted the sensing request.

Further, in the sensing request, the first range may be determined based on a second range in which the UE has executed sensing.

By this means, the system according to the present disclosure can provide a result of sensing for the spatial range determined by reflecting the spatial range in which the UE has executed sensing.

Further, a terminal according to the present disclosure includes a controller including at least one processor configured to execute: transmitting to a core network, a sensing request that requests a result of sensing in a first range designated using a predetermined location as an origination; and receiving from the core network, a first sensing result that is a result of executing sensing in a region including at least the first range based on the sensing request.

By this means, the terminal according to the present disclosure can provide effects similar to those of the above-described system.

The controller including at least one processor included in the terminal according to the present disclosure may be configured to execute: determining a mixing ratio of the first sensing result and a second sensing result that is a result of executing sensing in a second range based on the second sensing result; and calculating a sensing result in the first range from the first sensing result and the second sensing result based on the mixing ratio.

By this means, the terminal according to the present disclosure can calculate a result of sensing of a desired spatial range by mixing a result of sensing acquired from a system 100 and a result of sensing executed by the terminal based on the result obtained by the terminal executing the sensing. By this means, the terminal according to the present disclosure can obtain a result of sensing with higher reliability in the desired spatial range.

Specific embodiments of the present disclosure will be described below based on the drawings. Hardware configurations, module configurations, functional configurations, and the like, described in the respective embodiments are not intended to limit a technical scope of the disclosure thereto unless otherwise specified. For example, while in the following description, an example where the present disclosure is applied to a 5th generation mobile communication system will be described, the present disclosure may be applied to a 4th generation mobile communication system or mobile communication systems later than the 5th generation. Further, the present disclosure may be applied to mobile communication systems specified by specifications other than 3GPP (registered trademark) or may be applied to an arbitrary wireless communication system or wired communication system other than a mobile communication system.

### (Embodiment)

### <Outline of Processing of System>

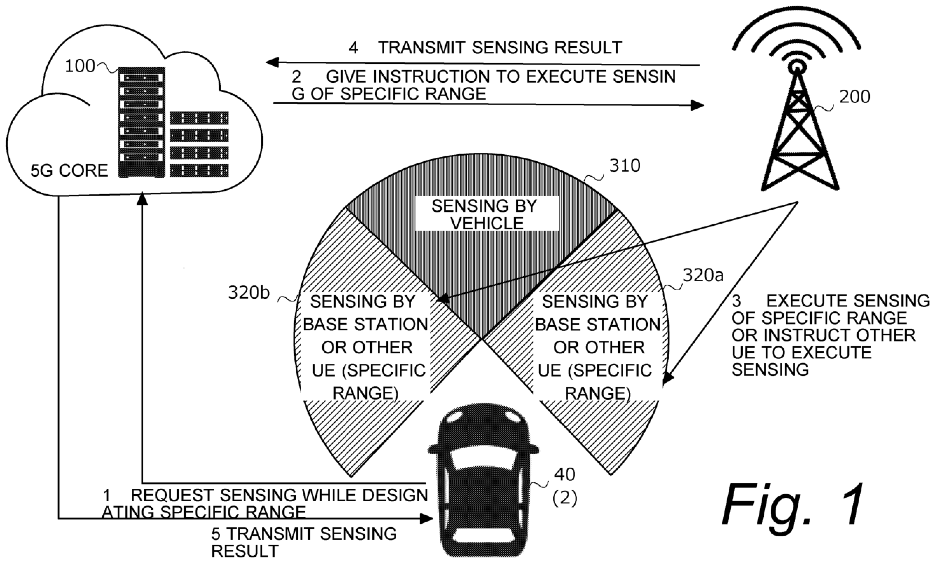

First, outline of processing to be executed by a system according to an embodiment will be described. Fig. 1 is a conceptual diagram of processing to be executed by a system 100 according to the embodiment. Here, the system 100 is typically a 5G core network. The system 100 communicates with UE (vehicle) included in the 5G network and receives or transmits various kinds of instructions or various kinds of data. Further, the system 100 communicates with a base station 200 that emits a radio wave that implements the 5G network, transmits various kinds of instructions and receives various kinds of data. Note that the system 100 communicates with the UE (vehicle) via an AF (which will be described later), but the system 100 may directly communicate with the UE (vehicle). In Fig. 1, illustration of the AF is omitted.

A vehicle 40 that is UE 2 is a vehicle capable of executing sensing of the circumference of the vehicle 40 using a sensor, or the like, mounted on the vehicle 40. First, the vehicle 40 designates a spatial range for which 5G sensing is to be executed and requests the system 100 to execute sensing. The vehicle 40 may designate a region for which it is difficult for the vehicle 40 itself to execute sensing (such as, for example, a region that is a blind spot from the vehicle 40 or a region where sensitivity of the sensor mounted on the vehicle 40 is not favorable) as the spatial range. For example, as illustrated in Fig. 1, the vehicle 40 may designate a first region 310 that is a region ahead of the vehicle 40 as a range for which the vehicle 40 itself performs sensing and designate second regions 320a and 320b that are lateral regions of the vehicle 40 as a range in which 5G sensing is to be performed by other apparatuses (including the base station 200, other UE 2, and the like).

Then, the system 100 that has received a request for executing sensing from the vehicle 40 instructs the base station 200 to execute 5G sensing of the spatial range designated by the vehicle 40. Then, the base station 200 that has received the instruction from the system 100 executes 5G sensing of the designated spatial range.

Alternatively, the system 100 that has received the request for executing sensing from the vehicle 40 may cause the base station 200 to instruct UE located in a coverage area to execute 5G sensing or other kinds of sensing of the spatial range designated by the vehicle 40. Then, each piece of UE that has received the instruction from the base station 200 executes 5G sensing or other kinds of sensing of the designated spatial range.

Then, the base station 200 transmits a result of 5G sensing of the designated spatial range to the system 100. In a case where the base station 200 instructs another sensing device to execute sensing of the designated spatial range, the base station 200 may acquire a result of sensing sensed by the other sensing device and transmit the result to the system 100. The system 100 that has received the result of sensing from the base station 200 transmits to the vehicle 40, the result of sensing of the spatial range designated by the vehicle 40.

In this manner, the system 100 can accept a request for sensing in the spatial range designated by the vehicle 40 that is the UE 2 and transmit the result of sensing in the spatial range executed by the base station 200 to the vehicle 40 that is the UE 2. In other words, the system 100 can provide to the UE 2, the result of sensing in the spatial range designated by the UE 2.

### <System Configuration>

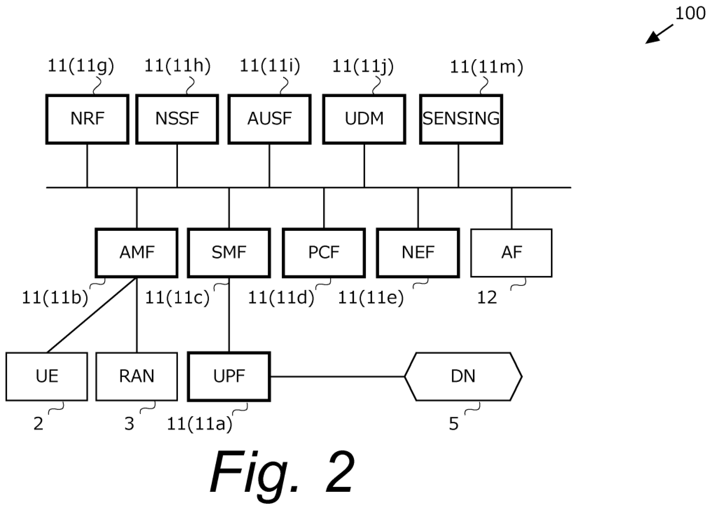

Fig. 2 illustrates components (constituent elements) constituting a 5th generation mobile communication system (5G network). In Fig. 2, the user equipment (UE) 2 is a terminal of a user (subscriber). A radio access network (RAN) 3 is an access network to the 5G core network (5GC). The RAN 3 is constituted with base stations (gNB). The 5G network includes the 5G core network (5GC) and the access network ((R)AN), and the UE 2, a DN 5 and an AF 12 are connected to the 5G network. Each of NFs 11a to 11m is a function implemented by one or more computers (information processing apparatuses) executing a program. However, a single computer may implement any two or more of the NFs 11a to 11m. Each of the NFs 11a to 11m can also be referred to as a network node or a network component. The components (constituent elements) illustrated in Fig. 1 implement the system 100 according to the embodiment.

The 5GC is constituted with an aggregate of components having predetermined functions called network functions (NFs). Fig. 1 illustrates the following as the NFs 11 that constitute the 5GC. Fig. 1 indicates a plurality of elements constituting the NFs 11 with rectangles thicker than other lines.

User plane function (UPF) 11a
Access and mobility management function (AMF) 11b
Session management function (SMF) 11c
Policy control function (PCF) 11d
Network exposure function (NEF) 11e
Network repository function (NRF) 11g
Network slice selection function (NSSF) 11h
Authentication server function (AUSF) 11i
Unified data management (UDM) 11j
Sensing function (SENSING) 11m

The UPF 11a performs routing and transferring of a user packet (user plane packet to be transmitted/received by the UE 2), packet inspection, and QoS processing.

The AMF 11b is a visitor location register of the UE in the 5GC. The AMF 11b accommodates the RAN 3 and performs subscriber authentication control, and location (mobility) management of the UE 2.

The SMF 11c manages a protocol data unit (PDU) session and controls the UPF 11a to implement quality of service (QoS) control and policy control. The PDU session is a virtual communication path for data exchange between the UE 2 and the data network (DN) 5. The DN 5 is a data network (such as the Internet) outside the 5GC.

The PCF 11d performs QoS control, policy control, and charging control under the control of the SMF 11c. In the QoS control, control of quality of communication, such as priority transfer of a packet is performed. In the policy control, communication control such as QoS, whether or not packet transfer can be performed, and charging is performed based on a network or subscriber information.

The NEF 11e plays a role of mediating communication between an external node and a node in a control plane.

The NRF 11g stores and manages information of the NFs (such as, for example, the AMF, the SMF and the UPF) in the 5GC. In response to an inquiry related to the NF that is desired to be used, the NRF 11g can return a plurality of candidates for the NF to an inquiry source.

The NSSF 11h has a function of selecting a network slice to be used by a subscriber from network slices generated by network slicing. The network slice is a virtual network having specifications according to the application.

The AUSF 11i is a subscriber authentication server that performs subscriber authentication under the control of the AMF 11b.

The UDM 11j holds subscriber related information and provides the subscriber information or acquires, registers deletes, and changes a state of the UE 2.

The SENSING 11m implements a sensing service including collection of sensing information from the UE 2, the RAN 3 (base station (gNB)) or other nodes, and provision of the collected sensing information to the UE 2 or other external systems (such as the AF 12 and the DN 5). Details of the SENSING 11m will be described later.

The AF 12 is an NF that performs processing using sensing data and provides an application service using the sensing data to the UE (terminal). As an example, the AF 12 notifies the UE (terminal) of a result of sensing in the designated spatial range acquired by the SENSING 11m. Further, an application program to be executed at the UE (terminal) may operate as the AF 12.

In the 5GC, there is a case where a plurality of NFs of the same type is prepared. For example, there is a case where the NF 11 is prepared for each data center (facility). Further, there is a case where one NF 11 is shared among the data centers. Still further, there is a case where a plurality of NFs 11 of the same type is constituted in one data center. The number of the data centers, the number of the NFs 11, and a correspondence relationship between the NFs 11 and the data centers can be set as appropriate.

### <Configurations of Information Processing Apparatus and Terminal>

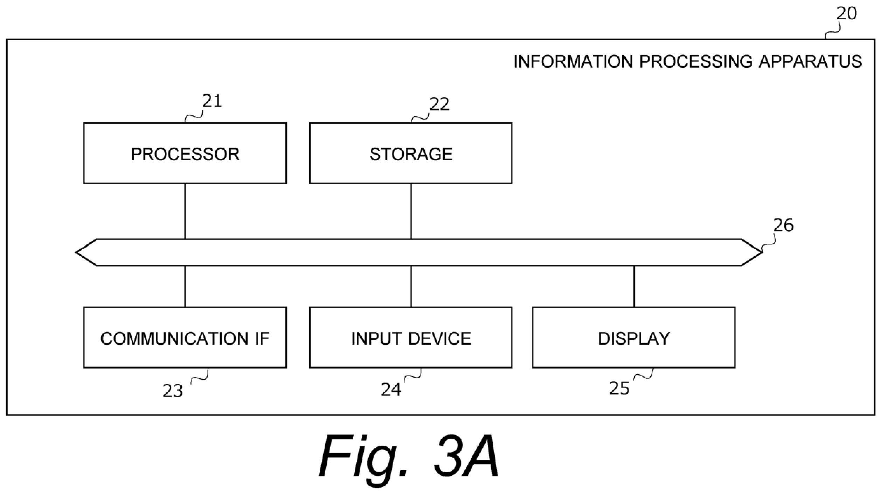

Fig. 3A illustrates a configuration example of an information processing apparatus 20 operable as the system 100 according to the embodiment. In Fig. 3A, the information processing apparatus 20 can be constituted using a dedicated or general-purpose information processing apparatus (computer) such as a personal computer (PC), a workstation (WS) or server machine. Of course, the information processing apparatus 20 may be an aggregate (cloud) of one or more computers.

The information processing apparatus 20 includes a processor 21 as a processor or a controller, a storage 22, a communication interface 23 (communication IF 23), an input device 24, and a display 25, which are connected to each other via a bus 26.

The storage 22 includes a main storage device and an auxiliary storage device. The main storage device is used as at least one of a memory area of a program and data, a program loaded area, a program work area, a communication data buffer area, or the like. The main storage device is constituted with a random access memory (RAM) or a combination of the RAM and a read only memory (ROM). The auxiliary storage device is used as a memory area of data and a program. A non-volatile storage medium is applied as the auxiliary storage device. The non-volatile storage medium is, for example, a hard disk, a solid state drive (SSD), a flash memory, an electrically erasable programmable read-only memory (EEPROM), or the like. Further, the storage 22 can include a drive device of a disk recording medium.

The communication IF 23 is a circuit that performs communication processing. For example, the communication IF 23 is a network interface card (NIC). Further, the communication IF 23 may be a wireless communication circuit that performs wireless communication (such as 5G, wireless LAN (Wi-Fi (registered trademark)) and BLE). Further, the communication IF 23 may be a combination of a circuit that performs wired communication processing and a wireless communication circuit.

The input device 24 includes a key, a button, a pointing device, a touch panel, and the like, and is used to input information. The display 25 is, for example, a liquid crystal display, or the like, and displays information and data.

The processor 21 performs various kinds of processing by executing various kinds of programs stored in the storage 22. By the processor 21 executing the program stored in the storage 22, the information processing apparatus 20 can operate as each of the NFs 11a to 11m and external servers 12a and 12b. The processor 21 is a specific example of a controller of the system 100.

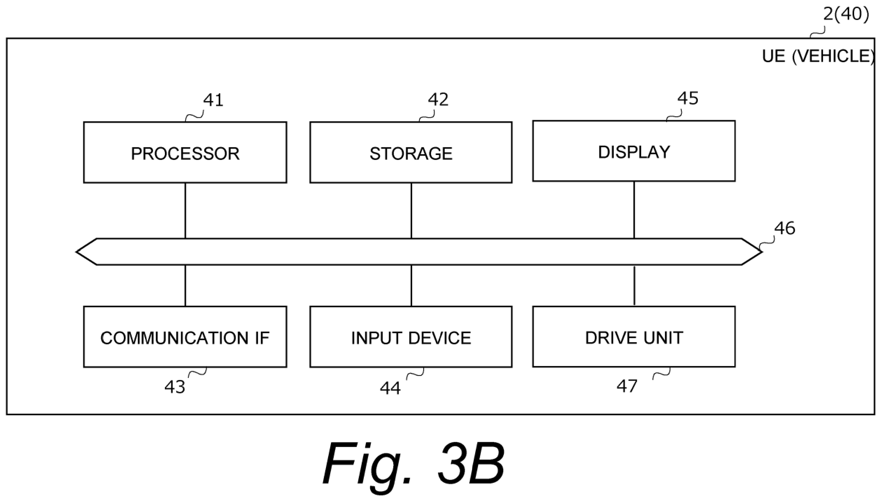

Fig. 3B is a view illustrating a configuration example of the vehicle 40 operable as the UE 2. The vehicle 40 includes a processor 41, a storage 42, a communication interface 43 (communication IF 43), an input device 44, a display 45, and a drive unit 47, which are connected to each other via a bus 46. As the processor 41, the storage 42, the communication IF 43, the input device 44, and the display 45, those similar to the processor 21, the storage 22, the communication IF 23, the input device 24, and the display 25 can be used. Thus, description thereof will be omitted.

The processors 21 and 41 are, for example, central processing units (CPUs). The CPU is also referred to as a microprocessor unit (MPU). The processors 21 and 41 may have a single processor configuration or a multi-processor configuration. Further, a single physical CPU connected by a single socket may have a multi-core configuration. The processors 21 and 41 may include arithmetic devices having various circuit configurations such as a digital signal processor (DSP) or a graphics processing unit (GPU). Further, the processors 21 and 41 may have a configuration of coordinating with at least one of an integrated circuit (IC), other digital circuits, analog circuits, or the like. The integrated circuit includes an LSI, an application specific integrated circuit (ASIC), a programmable logic device (PLD), and the like. The PLD includes, for example, a field-programmable gate array (FPGA). The processors 21 and 41 include what is called, for example, a micro controller (MCU), a system-on-a-chip (SoC), a system LSI, a chip set, and the like.

The drive unit 47 is means for causing the vehicle 40 to travel. The drive unit 47 can include, for example, a motor and an inverter for driving wheels, a brake, and a steering mechanism. The drive unit 47 may operate by power supplied from a battery.

### <System Operation>

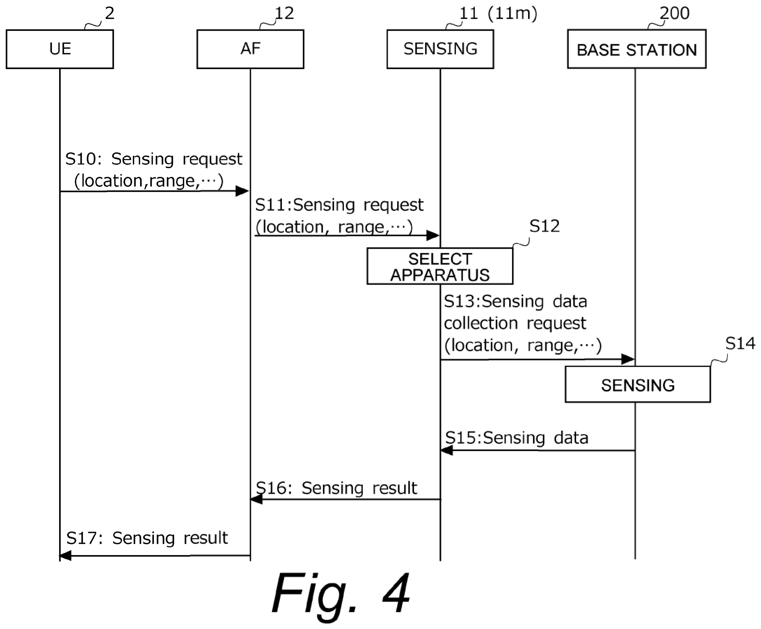

Fig. 4 is a sequence diagram regarding sensing processing to be executed by the controller of the system 100 according to the embodiment. Note that the sequence diagram indicated here is an example, and may include processing other than the indicated processing, or part of the indicated processing may be omitted or the indicated execution order of the processing may be changed.

In the present operation example, the UE 2 that transmits a sensing request to the SENSING 11m corresponds to the vehicle 40 equipped with a mobile communication terminal that utilizes the present service, and the SENSING 11m and the AF 12 correspond to applications that provide the present service.

In step S10, the UE 2 that requests sensing of the designated spatial range transmits a request message that requests sensing to the AF 12. The request message is a specific example of the sensing request. The request message includes a parameter for specifying the spatial range to be sensed.

The parameter for specifying the spatial range to be sensed can express, for example, location information representing a point that becomes an origination for defining the spatial range, information indicating a range represented based on the origination, and the like. The range represented based on the origination may be represented by an angle based on the origination or may be represented by a direction, an azimuth angle, or the like, based on the origination. Note that here, the spatial range may be represented as a two-dimensional plane or may be represented as a three-dimensional space. Note that the spatial range to be sensed refers to a first range.

Further, the request message may include information regarding time or a time length at or during which sensing is to be executed. Note that the UE 2 may directly transmit the request message to the SENSING 11m not through the AF 12.

In step S11, the AF 12 transmits a request message that requests sensing to the SENSING 11m. In a similar manner to step S10, the request message includes a parameter for specifying the spatial range to be sensed. Further, the request message may include information regarding time or a time length at or during which sensing is to be executed.

In step S12, the SENSING 11m that has received the request message from the AF 12 selects at least one apparatus that is caused to execute 5G sensing in the spatial range designated by the UE 2 among a plurality of apparatuses. The SENSING 11m may select an apparatus closest to a location of the spatial range designated by the UE 2. Here, the apparatus includes the base station 200 and one or a plurality of pieces of UE 2. The SENSING 11m may select the base station or arbitrary UE 2 or may select both the base station and one or more pieces of arbitrary UE 2 as an apparatus that is caused to execute 5G sensing.

In step S13, the SENSING 11m requests the base station 200 to collect sensing data. In this event, the SENSING 11m designates the parameter for specifying the spatial range to be sensed. Note that the SENSING 11m may designate a parameter, or the like, indicating time or a time length at or during which sensing is to be executed.

In step S14, the base station 200 performs 5G sensing in the designated spatial range. Note that the base station 200 may instruct a sensing device located in the coverage area to perform sensing in the designated spatial range instead of performing 5G sensing by itself.

Then, in step S15, the base station 200 transmits the collected sensing data to the SENSING 11m. In a case where the base station 200 executes sensing in the designated spatial range by itself, the base station 200 may transmit sensing data collected by the base station 200. Further, in a case where the base station 200 requests a sensing device located in the coverage area to perform sensing in the designated spatial range, the base station 200 may acquire sensing data from the sensing device and transmit the acquired sensing data to the SENSING 11m.

In step S16, the SENSING 11m transmits a sensing result to the AF 12. The SENSING 11m may transmit the sensing data received from the base station 200 as is to the AF 12 or may transmit data obtained by processing the sensing data received from the base station 200 to the AF 12. The sensing result transmitted by the SENSING 11m is a specific example of a first sensing result.

In step S17, the AF 12 transmits the sensing result to the UE 2. The AF 12 may transmit the sensing result received from the SENSING 11m as is to the UE 2 or may transmit data obtained by processing the sensing result received from the SENSING 11m to the UE 2.

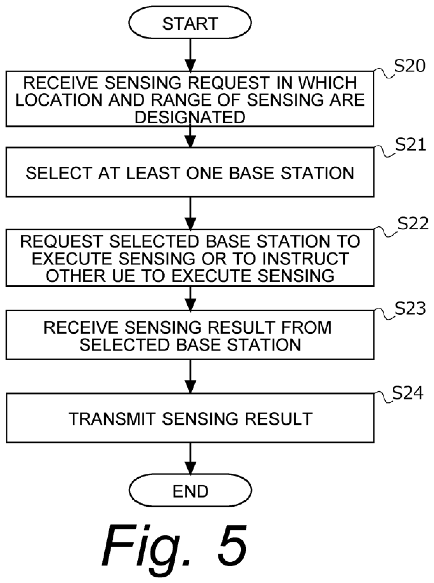

Processing to be executed by the controller of the system 100 according to the embodiment will be described next. Fig. 5 is a flowchart regarding sensing processing to be executed by the controller of the system 100 according to the embodiment. Specifically, the processing to be described using Fig. 5 may be executed by the processor 41 of the information processing apparatus 20 that is operable as the system 100.

First, in step S20, the SENSING 11m receives a request (sensing request) for sensing for which the predetermined location and the spatial range in which sensing is to be performed are designated from the AF 12 that has received from the UE 2, the request for sensing for which the predetermined location and the spatial range are designated. Alternatively, the SENSING 11m may receive the request message for the sensing from the UE 2. The request message may include information designating time or a time length at or during which sensing is to be executed in the spatial range designated by the UE 2.

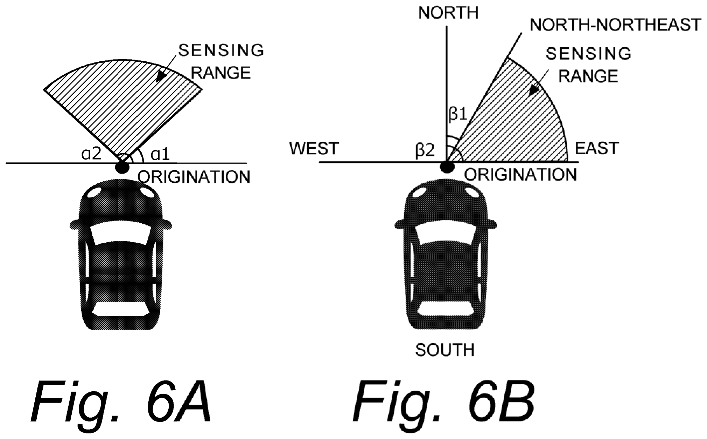

In the sensing request, the spatial range in which sensing is to be executed may be expressed based on information regarding a center angle centered around the predetermined location. Here, the predetermined location may be a location at which the UE 2 is located or may be a specific point separate from the UE 2. Fig. 6A and 6B is a view for describing a method for expressing a range for which sensing is requested. For example, as illustrated in of Fig. 6A, the UE 2 may designate a fan-shaped range having a predetermined radius and having as a center angle, an angle from an angle α1 to an angle α2 from a horizontal line using a location at which the UE 2 that is the vehicle 40 is located as an origination, as the range in which sensing is to be executed. The range in which sensing is to be executed is not limited to a fan-shaped range or a circular range and may be expressed with a polygon.

Further, in the sensing request, the information regarding the center angle representing the spatial range in which sensing is to be executed may be expressed based on information indicating a bearing or an azimuth angle viewed from a predetermined location. Here, the predetermined location may be a location at which the UE 2 is located or a specific point separate from the UE 2. For example, as illustrated in Fig. 6B, the UE 2 may designate a fan-shaped range having a predetermined radius and having as a center angle, an angle from an angle β1 (azimuth angle) to an angle β2 from a line extending due north from the location at which the vehicle 40 is located, as the range in which sensing is to be executed. Alternatively, the range in which sensing is to be executed may be expressed as a fan-shaped range having a predetermined radius from north-northeast to east from a point at which the UE 2 that is the vehicle 40 is located using a direction. The range in which sensing is to be executed is not limited to a fan-shaped range or a circular range and may be expressed with a polygon.

Note that the spatial range (first range) in which sensing is to be executed may be determined based on a range (referred to as a second range) in which the UE 2 itself that has transmitted the sensing request has executed sensing. For example, the UE 2 may specify a region in which quality of acquired data is insufficient among the region in which the UE 2 itself has executed sensing and designate the specified region as the first range in the sensing request. Alternatively, the UE 2 may designate part of a region outside a region in which the UE 2 itself can execute sensing as the first range in the sensing request. Further, the UE 2 may instruct the system 100 on a spatial range in which sensing is unnecessary in the sensing request.

Then, in step S21, the SENSING 11m selects at least one base station 200 from a plurality of base stations. The SENSING 11m selects the base station 200 that is caused to execute 5G sensing or the base station 200 that is caused to request the sensing device to execute sensing. Here, the sensing device may be other UE different from the UE 2. For example, the other UE may be a vehicle equipped with a mobile communication terminal, a smartphone, a tablet terminal, or the like. The SENSING 11m may select one base station or may select two or more base stations.

Here, for example, the SENSING 11m may select a base station closest to a location designated as the range in which sensing is to be executed among the plurality of base stations, as the base station 200 that is caused to execute sensing.

Then, in step S22, the SENSING 11m may request the selected base station 200 to execute 5G sensing. Alternatively, the SENSING 11m may request the selected base station 200 to instruct at least one sensing device located within the coverage area of the base station 200 to execute sensing of the designated spatial range. The base station 200 may select a sensing device closest to the predetermined location among sensing devices located within the coverage area or may select a sensing device most suitable to perform sensing of a type requested by the SENSING 11m.

Then, in step S23, the SENSING 11m receives a result of sensing from the selected base station 200. The SENSING 11m may receive a result of 5G sensing of a region including the designated spatial range executed by the selected base station 200.

Alternatively, the SENSING 11m may receive a result of sensing of a region including the spatial range received by the selected base station 200 from the sensing device located within the coverage area. A sensing method to be executed by the sensing device is not limited to 5G sensing and may be sensing using LiDAR, a millimeter wave sensor, a temperature sensor, an ultrasonic sensor, an image sensor, a current sensor, or the like. Note that the SENSING 11m may directly receive a result of sensing from the sensing device.

Then, in step S24, the SENSING 11m transmits a result of sensing (first sensing result) to the UE 2 that has transmitted the sensing request to the system 100. The SENSING 11m may transmit data received from the base station 200 or the other sensing device as is to the UE 2 or may transmit data obtained by processing the data to the UE 2.

By this means, the system 100 can provide to the UE 2, a result of sensing of the spatial range requested by the UE 2.

### <UE operation>

Operation of the UE 2 that requests the system 100 to perform sensing of the designated spatial range will be described next.

First, the UE 2 transmits a request message that requests the system 100 (core network) to perform sensing of the designated spatial range (first range). The UE 2 designates the predetermined location and the spatial range in which sensing is to be executed in the request message. Further, the UE 2 may designate time or a time length at and during which sensing is to be executed in the request message.

Then, the UE 2 acquires a first sensing result that is a result of executing sensing in a region including the first range from the system 100 (core network). The first sensing result may include information corresponding to an existence probability, or the like, of an obstacle in the region. Note that the information included in the first sensing result is not limited to those described above. The first sensing result is a result obtained by the base station 200 that has received the instruction from the system 100 or the other sensing device that has received the instruction from the base station 200 executing sensing in the region including the first range.

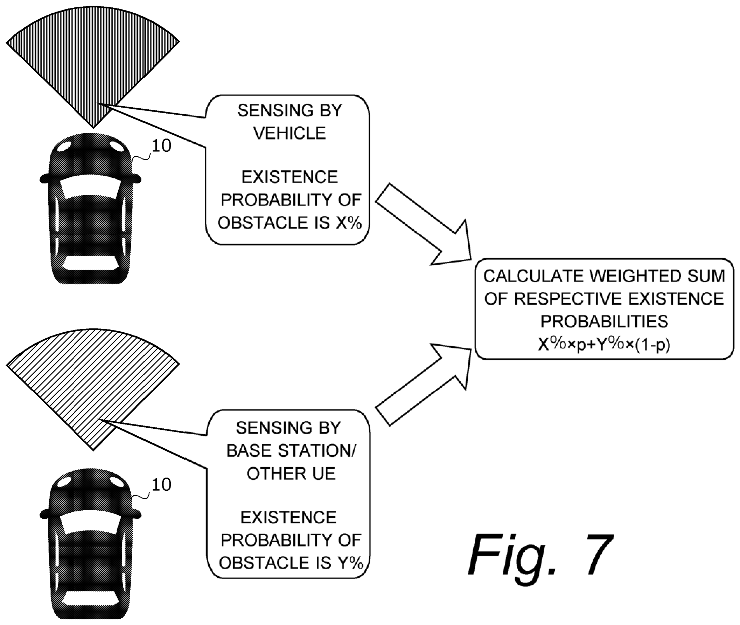

In a case where the UE 2 acquires a result of sensing of the designated spatial range from the system 100, the UE 2 can obtain a result of sensing with higher accuracy by mixing a result of sensing acquired from the system 100 and a result of sensing performed by the UE 2. Fig. 7 is a conceptual diagram of processing of mixing the result of sensing executed by the system 100 according to the embodiment and the result of sensing executed by the UE.

For example, it is assumed that an existence probability of an obstacle in the spatial range in which the vehicle 40 that is the UE 2 has executed sensing is X%. Further, it is assumed that as a result of the other sensing device or the base station 200 executing sensing for the same spatial range, an existence probability of an obstacle in the spatial range is Y%. In this case, the UE 2 may employ a weighted average (weighted sum) of the existence probabilities as the existence probability of an obstacle in the spatial range. Specifically, the UE 2 may set a value calculated from an expression of X% × P + Y% × (1 - p) (where p is a number equal to or greater than 0 and equal to or less than 1) as the existence probability of an obstacle in the spatial range.

In the above-described example, a mixing ratio (value of p) may be determined based on priority of sensing (for example, using a camera sensor) by the vehicle 40 and 5G sensing in sensing of the spatial range. For example, in the above-described example, a case will be considered where the vehicle 40 executes sensing using a camera sensor. In this case, the UE 2 may prioritize sensing using the camera sensor to be executed by the vehicle 40 for a portion where brightness is sufficient among a predetermined spatial range. Then, the UE 2 may prioritize 5G sensing to be requested to the system 100 by the vehicle 40 for a portion where brightness is not sufficient. Note that the processing described here may be executed by the AF 12.

In this manner, the UE 2 can mix the result of sensing executed by the base station 200 or the other sensing device in the designated spatial range and the result of sensing executed by the UE 2 itself in the designated spatial range. Thus, the UE 2 can obtain a result of sensing with higher reliability.

Note that the UE 2 may determine based on a result (referred to as a second sensing result) obtained by the UE 2 itself executing sensing in the second range that is the designated spatial range, a mixing ratio of the first sensing result received from the system 100 and the second sensing result. Then, the UE 2 may calculate a sensing result in the first range from the first sensing result and the second sensing result based on the determined mixing ratio. For example, the UE 2 may calculate a weighted average of an existence probability of an obstacle in the first range indicated by the first sensing result and an existence probability of an obstacle in the first range indicated by the second sensing result based on predetermined weights.

Further, processing of determining the mixing ratio of the first sensing result and the second sensing result, and processing of mixing the first sensing result and the second sensing result (such as processing of calculating a weighted average) may be executed by the AF 12 instead of the UE 2.

### <Other Modifications>

The above-described embodiment is merely an example, and the present disclosure can be changed and implemented as appropriate without departing from the gist of the present disclosure.

In the above-described embodiment, an example has been described where the spatial range in which sensing is to be executed is designated using as the origination, the location of the UE 2 that has transmitted the sensing request to the AF 12 or the system 100. However, the spatial range in which sensing is to be executed does not have to be determined using as the origination, the location of the UE 2 that has transmitted the sensing request to the AF 12 or the system 100. The spatial range in which sensing is to be executed may be a spatial range using an arbitrary point as the origination.

While in the above-described embodiment, data is provided to the user terminal using a Request/Response scheme, data may be provided using a Subscribe/Notify scheme.

The present disclosure can also be implemented by one or more processors of a computer to which a computer program implementing the functions described in the above-described embodiment is supplied, reading and executing the program. Such a computer program may be provided to the computer using a non-transitory computer-readable storage medium that can be connected to a system bus of the computer or may be provided to the computer via a network. The non-transitory computer-readable storage medium includes, for example, an arbitrary type of disk such as a magnetic disk (such as a Floppy (registered trademark) disk and a hard disk drive (HDD)), and an optical disk (such as a CD-ROM, a DVD disk, and a Blu-ray disk), a read only memory (ROM), a random access memory (RAM), an EPROM, an EEPROM, a magnetic card, a flash memory, an optical card, an arbitrary type of medium appropriate for storing an electronic command.

## Claims

1. A system that constitutes a wireless communication network, the system comprising a controller comprising at least one processor configured to execute:
receiving a sensing request that requests a result of sensing in a first range designated using a predetermined location as an origination; and
transmitting a first sensing result that is a result of executing sensing in a region including at least the first range based on the sensing request.

2. The system according to claim 1, wherein the sensing request includes information regarding a center angle centered around the predetermined location for designating the first range.

3. The system according to claim 2, wherein the information regarding the center angle includes information indicating a bearing or an azimuth angle viewed from the predetermined location.

4. The system according to claim 1, wherein the sensing request includes information regarding time or a time length at or during which sensing is to be executed.

5. The system according to any one of claims 1 to 4, wherein the controller comprising at least one processor is configured to execute transmitting an execution instruction that gives an instruction to execute sensing in the first range to at least one base station among a plurality of base stations.

6. The system according to any one of claims 1 to 4, wherein the sensing request includes a location of user equipment (UE) that has transmitted the sensing request as the predetermined location.

7. The system according to claim 6, wherein in the sensing request, the first range is determined based on a second range in which the UE has executed sensing.

8. A terminal comprising a controller comprising at least one processor configured to execute:
transmitting to a core network, a sensing request that requests a result of sensing in a first range designated using a predetermined location as an origination; and
receiving from the core network, a first sensing result that is a result of executing sensing in a region including at least the first range based on the sensing request.

9. The terminal according to claim 8, wherein the controller comprising at least one processor is configured to execute:
determining a mixing ratio of the first sensing result and a second sensing result that is a result of executing sensing in a second range based on the second sensing result; and
calculating a sensing result in the first range from the first sensing result and the second sensing result based on the mixing ratio.
